# EUROPEAN PATENT SPECIFICATION

(11) **EP 1 933 575 B1**
(45) Date of publication and mention of the grant of the patent: **06.11.2013**
(21) Application number: 05783905.2
(22) Date of filing: 06.09.2005
(51) Int. Cl.: H04W 68/00, H04W 84/08, H04W 4/06, H04W 4/08

(54) **METHOD OF QUICKLY ESTABLISHING A CALL IN CDMA TRUNKED COMMUNICATION SYSTEM**
VERFAHREN ZUM SCHNELLEN HERSTELLEN EINER VERBINDUNG IN CDMA-VERBINDUNGSLEITUNGS-KOMMUNIKATIONSSYSTEMEN
PROCEDE D'ETABLISSEMENT RAPIDE D'APPEL DANS UN SYSTEME DE COMMUNICATION A RESSOURCES PARTAGEES CDMA

(43) Date of publication of application: 18.06.2008
(73) Proprietor: ZTE Corporation, Guangdong Province 518057 (CN)
(72) Inventor: ZHOU, Jiang, Guangdong 518057 (CN); XIANG, Yang, Guangdong 518057 (CN); PEI, Huimin, Guangdong 518057 (CN); LOU, Dasheng, Guangdong 518057 (CN); GUO, Boyong, Guangdong 518057 (CN); DING, Mengjiao, Guangdong 518057 (CN)
(74) Representative: Hayden, Nicholas Mark
(86) International application number: PCT/CN2005/001410
(87) International publication number: WO 2007/028274

(56) References cited:
- WO-A1-00/69190
- WO-A1-01/31968
- CN-A- 1 642 054
- US-A- 5 835 860
- US-A1- 2004 042 438

## Description

### Technical Field

The present invention relates to trunked communication system based on Code Division Multiple Access (CDMA) system, more specifically, relates to a method for quickly establishing a call in CDMA trunked communication system.

### Background Art

A trunked communication system based on CDMA adopts half-duplex communication mode in combination of CDMA technology and trunked communication technology to realize one-to-many communication. Most of trunked communication systems currently used is private network systems. However, trunked communications are more and more applied to public network systems for providing value-added services to user.

In an existing trunked communication system based on CDMA, when performing a group call, each of user terminals is paged in point-to-point paging mode, and establishes a call one by one, the group call is established successfully only when all the user terminals have finished their call connections. Accordingly, a problem might be occurred: due to the point-to-point paging, it will result in a heavy load of forward paging channels and reverse paging channels and it will take a long time to finish the processing, in the case where many user terminals in one group gather in area of one sector of base station. Moreover, the time required for call establishment deteriorates sharply as the number of the user terminals in the group increases. It may reach more than ten seconds, even tens of seconds, which causes that the users cannot endure such duration of call establishing. Accordingly, the use of CDMA trunked technology is restricted terribly. Jiang et al. (US 2004/0042438 A1) relates to wireless communication systems and techniques based on code division multiple access (CDMA), and in particular, to system architecture and configurations, management, controls, and operations of trunking systems for CDMA wireless communication.

### Summary of the Invention

The present invention is proposed based on the above mentioned problems and has an object of providing a method for quickly establishing a call in CDMA trunked communication system to overcome the defect in the prior art that the paging access time is too long due to many group user terminals within one sector, so as to achieve quick call establishment of called terminals in point-to-multipoint communication.

A method for quickly establishing a call in a CDMA trunked communication system comprising the following steps:
a trunked server constructing a group-based paging message and sending it to a base station controller after receiving a request to call establishing from an originating terminal;
the base station controller sending the group-based paging message to a corresponding base station transceiver according to a group identifier;
the base station transceiver establishing dynamic access channels and sending a broadcast paging message to user terminals within its coverage;
the user terminals performing matching based on the group identifier, selecting available access channels, and sending paging response messages to the base station transceiver;
the base station transceiver sending a group-based paging response message to the base station controller;
the base station controller sending a channel assignment message to the base station transceiver;
the base station transceiver sending an extended-channel assignment message to the user terminals;
the user terminals achieving signaling hand-shake with a base station subsystem based on the extended-channel assignment message and entering call state.

Preferably, the step of constructing the group-based paging messages includes: encoding the group identifier; and writing the encoded group identifier into broadcast address field of paging messages.

Preferably, the step of the base station transceiver establishing dynamic access channels further includes:
detecting working state of all sectors and paging channels configured thereto;
adding the sectors with normal working state into a set of available sectors;
calculating the number of dynamic access channels which need to be established under each of the sectors; and
distributing resources of reverse channel units to each of the dynamic access channels.

Preferably, the step of calculating the number of dynamic access channels further includes: acquiring the number of idle reverse channel units under all the available sectors; calculating the number of the dynamic access channels under each of the available sectors based on the predetermined proportion between the number of the idle reverse channel units and the number of the dynamic access channels.

Preferably, the user terminals select the available access channels based on Hash Algorithm.

Preferably, the broadcast paging message at least includes the group identifier and information relative to the dynamic access channels.

Preferably, the paging response message at least includes the group identifier.

Preferably, the extended-channel assignment message adopts reserved assignment mode 7 and omits power control and length code parameter therein.

Preferably, the method further comprises the steps: providing a timer in the base station subsystem; and releasing the dynamic access channels in the case of time-out of the timer.

The method of the present invention achieves an optimized design of forward and reverse common channels. It is not only adapted to saving on-the-air link resources, but also improves call connection speed when group user terminals are crowded, and solves the problem that connection time is too long in existing CDMA public network trunked system. Practical test shows that connection time is within 3 seconds in the case of 60 users in a single sector.

### Brief Description of the Drawings

Fig. 1 is a flow chart of the method for quickly establishing a call of one embodiment according to the present invention;
Fig. 2 is a flow chart of the step of establishing dynamic access channels in the method according to the present invention.

### Modes of Carrying Out the Invention

The above mentioned and other objects, features, and advantages of the present invention will be shown more explicitly by the detailed description of an embodiment of the present invention in combination of the figures:

The core of the present invention is: to respectively optimize signaling of forward and reverse common channels, wherein on forward common channel, broadcast paging mode of group call is adopted, in which user terminal performs matching and response based on a group identifier; and on reverse common channel, dynamic access channels are established/released for providing the same to user terminal.

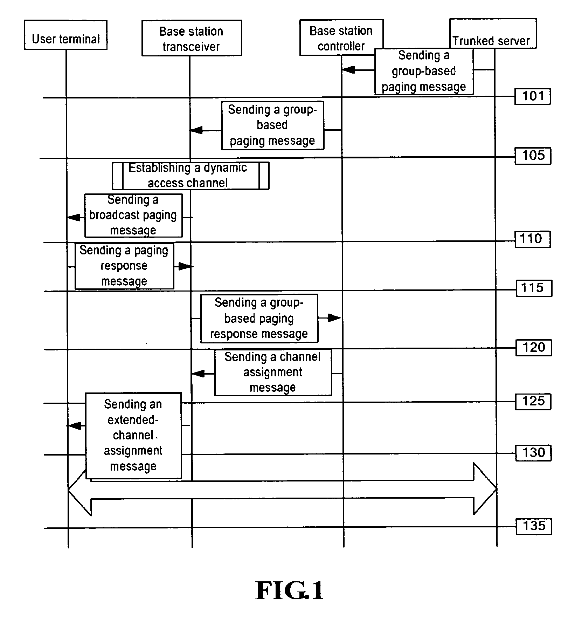

Fig. 1 shows a flow chart of a method for quickly establishing a call in trunked communication system of an embodiment according to the present invention. In this embodiment, the trunked communication system is a trunked communication system based on CDMA and comprises a trunked server, a base station subsystem (including a base station controller and a base station transceiver) and a user terminal, wherein the user terminal contains information about the group which it belongs to, such as a group identifier GID.

As shown in Fig. 1, firstly, in step **101,** the trunked server, having received a request for establishing a call from an originating terminal, examines whether the group which the originating terminal belongs to have the attribute of group call. In the case where it has this attribute, broadcast paging mode of group-based paging is used. Group-based broadcast paging is just broadcast paging performed based on a group identifier. The group identifier GID may be composed of 8 bits of decimal numbers, recorded in BCD format, and saved as 32-bit data. Of course, the group identifier GID may also be represented in other organization modes. Prior to the group-based paging, the trunked server needs to construct a group-based paging message, viz. write the group identifier after being encoded into the broadcast address field of paging message. Then, the trunked server sends the constructed group-based paging message to the base station controller.

Then, in step **105,** the base station controller, having received the above group-based paging message, sends the group-based paging message to a corresponding base station transceiver based on the group identifier therein.

In step **110,** the base station transceiver saves data information relative to the group call and establishes dynamic access channels. In the case where a plurality of users get access through a single access channel almost at the same time, it occurs easily that probe sequences of the users conflict, thereby leading to failure of the access or very long delay. If a plurality of access channels is configured, it may wastes the resources. Thus, the present invention adopts the mode of dynamically configuring access channels, so that access channels are established only in the call access stage, and then those access channels are released in time. The detailed process that the base station transceiver establishes dynamic access channels will be described in the following. In addition, a timer is provided in the base station subsystem. The timer is enabled when the base station transceiver establishes the dynamic access channels. In this embodiment, the timing of the timer is about 3 seconds. In the case of time-out of the timer, the base station transceiver releases those dynamic access channels automatically. In the case where group-based paging from the same base station transceiver comes again without time-out of the timer, the timer needs to be reset and restarted thereby implementing multi-group sharing of the dynamic access channels.

Meanwhile, the base station transceiver constructs a broadcast paging message which uses a specific type of the broadcast address and contains an encoded group identifier and fields relevant to the dynamic access channels, wherein the encoded group identifier may be, for instance, in the segment encoding format similar to IMSI. In this embodiment, the broadcast paging message may use the following mode: PageClass=11, SubClass=00, DataBurstType=111100; address length is equal to 5 Bytes, address type is equal to 00; and the structure thereof is:

| Title of Field | Length (bit) | Description |
|---|---|---|
| | | No change of front LAC layer field |
| MSG_SEQ | 3 | Message sequence number |
| ADDR TYPE | 2 | Address type |
| GID | 28 | Group identifier |
| DACH_NUM | 4 | Number of dynamic access channels, within the range of 0-15 |
| PREAMBLE_SIZE | 2 | Preamble size of dynamic access channels |
| RESERVED | 1 | Reserved field |

Wherein the encoding mode of the 28-bit GID is shown in the table hereunder, proposed the GID is represented in the form of XXXYYZZZ (represented decimally):

| Front field of code | T (reserved, is 0) | XXX | YY | ZZZ |
|---|---|---|---|---|
| Number of code bits | 1 | 10 | 7 | 10 |

Having constructed the broadcast paging message, the base station transceiver sends the broadcast paging message to user terminals within its coverage.

In step **115**, the user terminal, having received the broadcast paging message, perform matching according to the group identifier therein. In the case of failure of the matching, this message will be ignored. In the case that the matching is successful, available dynamic or static channels will be selected through a random algorithm (such as Hash Algorithm), and then paging response message will be sent to the base station transceiver. Since the paging response message sent by the user terminal carries the group identifier, new paging response message is defined at the user terminal. In this embodiment, the new paging response message may use the structure as shown in the table hereunder:

| Title of Field | Length (bit) | Description |
|---|---|---|
| | | No change of front LAC layer field |
| GID | 28 | Group identifier |
| SLOT_CYCLE_INDEX | 3 | Cycling index of time slot indexing |
| MOB_P_REV | 8 | Version number of terminal protocol |
| FOR_RC_PREF | 5 | Forward preferable wireless configuration |
| REV_RC_PREF | 5 | Reverse preferable wireless configuration |
| REV_FCH_GATING | 1 | Reverse gating indication |

Since the paging response message omits unnecessary contents and reduces frame length, so as to avoid the occurrence of collision by access, the access to the user terminal may be accelerated.

In step **120,** the base station transceiver acquires corresponding data information relevant to the group call based on the group identifier carried by the paging response message, constructs a group-based paging response message and sends it to the base station controller. The group-based paging response message is the same as the present paging response message sent to the base station controller.

Having received the group-based paging response message, the base station controller sends a channel assignment message to the base station transceiver (step **125**). In order to reduce the burden of the forward common channels to avoid overload and accelerate the response of the user terminals, in step **130,** the base station transceiver, having received the channel assignment message, omits the unnecessary fields therein to reduce the length of frame, constructs simplified extended-channel assignment message and sends the same to the user terminal. In this embodiment, the simplified extended-channel assignment message adopts reserved assignment mode 7 and further omits power control and length code parameter therein.

In step **135,** the user terminal, having received the simplified extended-channel assignment message, searches for service channels based on the parameters therein and turns into the channels, then achieves signaling-handshake with the base station subsystem and enter call state without a pick-up operation.

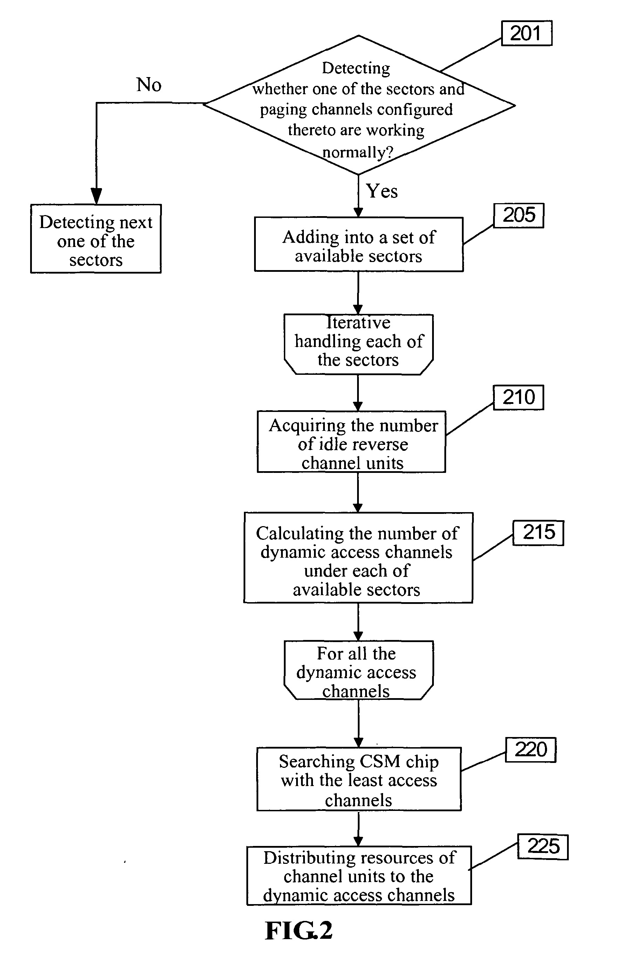

The process that the base station transceiver establishes dynamic access channels to assign the resources of access channels will be described in detail as following in combination of Fig. 2.

As shown in Fig. 2, in step **201,** the base station transceiver detects whether working state of all sectors there-under and paging channels configured thereto are normal or not. The detection may be performed in the iterative manner. If it is detected that one of the sectors and the paging channels configured thereto are working abnormally, detection of next one of the sectors is performed until all the sectors under the base station transceiver are detected. If one of the sectors and the paging channels configured thereto are working normally, in step **205,** the sector with normal working state is added into a set of available sectors in which dynamic access channels may be established. After the detection of all the sectors is finished, in step **210,** the number of idle reverse channel units of all the available sectors in the set of available sectors in the base station transceiver is acquired. Then, the number of dynamic access channels which need to be established under each of the available sectors is calculated based on a predetermined proportion between the number of the idle reverse channel units and the number of the dynamic access channels (step **215**). The number of the dynamic access channels may also be calculated based on the number of user terminals in the paging group by combining the number of the idle reverse channel units. After that, resources of the reverse channel units are assigned to each of the dynamic access channels that needs to be established, specifically by the following steps: in step **220,** searching a base station modem chip configured with the least access channels, and in step **225,** distributing resources of reverse channel units to the dynamic access channels on the searched chip.

### Industrial Applicability

The present invention is applicable to a code division multiple access trunked communication system.

## Claims

1. A method for quickly establishing a call in a CDMA trunked communication system **characterized by** comprising the following steps:
a trunked server constructing a group-based paging message and sending it to a base station controller after receiving a request to call establishing from an originating terminal (101);
the base station controller sending the group-based paging message to a corresponding base station transceiver according to a group identifier (105);
the base station transceiver establishing dynamic access channels and sending broadcast paging message to user terminals within its coverage (110);
the user terminals performing matching based on the group identifier, selecting available access channels, and sending paging response messages to the base station transceiver (115);
the base station transceiver sending a group-based paging response message to the base station controller (120);
the base station controller sending a channel assignment message to the base station transceiver (125);
the base station transceiver sending an extended-channel assignment message to the user terminals (130);
the user terminals achieving signaling hand-shake with a base station subsystem based on the extended-channel assignment message and entering call state (135).

2. The method for quickly establishing a call according to Claim 1, **characterized in that** the step of constructing the group-based paging message includes: encoding the group identifier; and writing the encoded group identifier into broadcast address field of paging messages.

3. The method for quickly establishing a call according to Claim 1 or 2, **characterized in that** the step that the base station transceiver establishes dynamic access channels further includes:
detecting working state of all sectors and paging channels configured thereto (201);
adding the sectors with normal working state into a set of available sectors (205);
calculating the number of dynamic access channels which need to be established under each of the sectors (215); and
distributing resources of reverse channel units to each of the dynamic access channels (225).

4. The method for quickly establishing a call according to Claim 3, **characterized in that** the step of calculating the number of dynamic access channels further includes:
acquiring the number of idle reverse channel units under all the available sectors (210);
calculating the number of the dynamic access channels under each of the available sectors based on the predetermined proportion between the number of the idle reverse channel units and the number of the dynamic access channels.

5. The method for quickly establishing a call according to Claim 3, **characterized in that** the user terminals select the available access channels based on Hash Algorithm.

6. The method for quickly establishing a call according to Claim 1 or 2, **characterized in that** the broadcast paging message at least includes the group identifier and information relative to the dynamic access channels.

7. The method for quickly establishing a call according to Claim 1 or 2, **characterized in that** the paging response message at least includes the group identifier.

8. The method for quickly establishing a call according to Claim 1 or 2, **characterized in that** the extended-channel assignment message adopts reserved assignment mode 7 and omits power control and length code parameter therein.

9. The method for quickly establishing a call according to Claim 1, **characterized in that** further comprises the steps: providing a timer in the base station subsystem; and releasing the dynamic access channels in the case of time-out of the timer.

## Patentansprüche

1. Ein Verfahren zum schnellen Aufbauen eines Anrufs in einem gebündelten CDMA-Kommunikationssystem, **dadurch gekennzeichnet, dass** es die folgenden Schritte beinhaltet:
Erstellen einer gruppenbasierten Rufnachricht durch einen gebündelten Server und
Senden der Rufnachricht an eine Basisstationsteuerung nach Empfangen einer Anforderung zum Anrufaufbauen von einem Ursprungsendgerät (101);
Senden der gruppenbasierten Rufnachricht durch die Basisstationsteuerung an einen korrespondierenden Basisstation-Sendeempfänger gemäß einer Gruppenkennung (105);
Aufbauen von dynamischen Zugriffskanälen und Senden einer Funkrufnachricht an Benutzerendgeräte durch den Basisstation-Sendeempfänger innerhalb seiner Reichweite (110);
Durchführen einer Zuordnung basierend auf der Gruppenkennung, Auswählen von verfügbaren Zugriffskanälen und Senden von Rufantwortnachrichten an den Basisstation-Sendeempfänger (115) durch die Benutzerendgeräte;
Senden einer gruppenbasierten Rufantwortnachricht an die Basisstationsteuerung (120) durch den Basisstation-Sendeempfänger;
Senden einer Kanalzuweisungsnachricht an den Basisstation-Sendeempfänger (125) durch die Basisstationsteuerung;
Senden einer erweiterten Kanalzuweisungsnachricht an die Benutzerendgeräte (130) durch den Basisstation-Sendeempfänger;
Erzielen von Signalisierungs-Handshake mit einem Basisstation-Untersystem basierend auf der erweiterten Kanalzuweisungsnachricht und Gelangen in einen Anrufstatus (135) durch die Benutzerendgeräte.

2. Verfahren zum schnellen Aufbauen eines Anrufs gemäß Anspruch 1, **dadurch gekennzeichnet, dass** der Schritt des Erstellens der gruppenbasierten Rufnachricht Folgendes umfasst: Codieren der Gruppenkennung; und Schreiben der codierten Gruppenkennung in ein Funkadressenfeld von Rufnachrichten.

3. Verfahren zum schnellen Aufbauen eines Anrufs gemäß Anspruch 1 oder 2, **dadurch gekennzeichnet, dass** der Schritt, dass der Basisstation-Sendeempfänger dynamische Zugriffskanäle aufbaut, ferner Folgendes umfasst:
Erkennen des Arbeitsstatus aller Sektoren und Rufen von damit konfigurierten Kanälen (201);
Hinzufügen der Sektoren mit normalem Arbeitsstatus in einen Satz verfügbarer Sektoren (205);
Berechnen der Zahl von dynamischen Zugriffskanälen, die unter jedem der Sektoren (215) aufgebaut werden müssen; und
Verteilen von Betriebsmitteln von Rückwärtskanaleinheiten auf jeden der dynamischen Zugriffskanäle (225).

4. Verfahren zum schnellen Aufbauen eines Anrufs gemäß Anspruch 3, **dadurch gekennzeichnet, dass** der Schritt des Berechnens der Zahl von dynamischen Zugriffskanälen ferner Folgendes umfasst:
Erfassen der Zahl von ungenutzten Rückwärtskanaleinheiten unter allen der verfügbaren Sektoren (210);
Berechnen der Zahl von dynamischen Zugriffskanälen unter jedem der verfügbaren Sektoren basierend auf dem vorbestimmten Verhältnis zwischen der Zahl der ungenutzten Rückwärtskanaleinheiten und der Zahl der dynamischen Zugriffskanäle.

5. Verfahren zum schnellen Aufbauen eines Anrufs gemäß Anspruch 3, **dadurch gekennzeichnet, dass** die Benutzerendgeräte die verfügbaren Zugriffskanäle basierend auf Hash-Algorithmus auswählen.

6. Verfahren zum schnellen Aufbauen eines Anrufs gemäß Anspruch 1 oder 2, **dadurch gekennzeichnet, dass** die Funkrufnachricht mindestens die Gruppenkennung und Informationen bezüglich der dynamischen Zugriffskanäle umfasst.

7. Verfahren zum schnellen Aufbauen eines Anrufs gemäß Anspruch 1 oder 2, **dadurch gekennzeichnet, dass** die Rufantwortnachricht mindestens die Gruppenkennung umfasst.

8. Verfahren zum schnellen Aufbauen eines Anrufs gemäß Anspruch 1 oder 2, **dadurch gekennzeichnet, dass** die erweiterte Kanalzuweisungsnachricht den reservierten Zuweisungsmodus 7 annimmt und Spannungssteuerung und den Längencodeparameter darin auslässt.

9. Verfahren zum schnellen Aufbauen eines Anrufs gemäß Anspruch 1, **dadurch gekennzeichnet, dass** es ferner die folgenden Schritte beinhaltet: Bereitstellen eines Zeitgebers im Basisstation-Untersystem; und Freigeben der dynamischen Zugriffskanäle im Falle von Zeitüberschreitung des Zeitgebers.

## Revendications

1. Un procédé pour établir rapidement un appel dans un système de communication à ressources partagées AMRC **caractérisé par** le fait de comprendre les étapes suivantes :
un serveur à ressources partagées construit un message de recherche sur la base d'un groupe et l'envoie à un contrôleur de station de base après avoir reçu une demande d'établissement d'appel provenant d'un terminal d'origine (101) ;
le contrôleur de station de base envoie le message de recherche sur la base d'un groupe à un émetteur-récepteur de station de base correspondant selon un identificateur de groupe (105) ;
l'émetteur-récepteur de station de base établit des canaux d'accès dynamique et envoie un message de recherche de diffusion à des terminaux utilisateur dans les limites de sa couverture (110) ;
les terminaux utilisateur effectuent une correspondance sur la base de l'identificateur de groupe, sélectionne des canaux d'accès disponibles, et envoie des messages de réponse de recherche à l'émetteur-récepteur de station de base (115) ;
l'émetteur-récepteur de station de base envoie un message de réponse de recherche sur la base d'un groupe au contrôleur de station de base (120) ;
le contrôleur de station de base envoie un message d'assignation de canal à l'émetteur-récepteur de station de base (125) ;
l'émetteur-récepteur de station de base envoie un message d'assignation de canal étendu aux terminaux utilisateur (130) ;
les terminaux utilisateur obtiennent une poignée de main de signalisation avec un sous-système de station de base sur la base du message d'assignation de canal étendu et entrent un état d'appel (135).

2. Le procédé pour établir rapidement un appel selon la revendication 1, **caractérisé en ce que** l'étape consistant à construire le message de recherche sur la base d'un groupe inclut : coder l'identificateur de groupe ; et écrire l'identificateur de groupe codé dans un champ d'adresse de diffusion de messages de recherche.

3. Le procédé pour établir rapidement un appel selon la revendication 1 ou la revendication 2, **caractérisé en ce que** l'étape selon laquelle l'émetteur-récepteur de station de base établit des canaux d'accès dynamique inclut en outre :
détecter un état de fonctionnement de tous les secteurs et des canaux de recherche configurés sur celui-ci (201);
ajouter les secteurs avec un état de fonctionnement normal dans un ensemble de secteurs disponibles (205) ;
calculer le nombre de canaux d'accès dynamique qui doivent être établis sous chacun des secteurs (215) ; et
distribuer des ressources d'unités de canal retour à chacun des canaux d'accès dynamique (225).

4. Le procédé pour établir rapidement un appel selon la revendication 3, **caractérisé en ce que** l'étape consistant à calculer le nombre de canaux d'accès dynamique inclut en outre :
acquérir le nombre d'unités de canal retour inactives sous tous les secteurs disponibles (210) ;
calculer le nombre des canaux d'accès dynamique sous chacun des secteurs disponibles sur la base de la proportion prédéterminée entre le nombre des unités de canal retour inactives et le nombre des canaux d'accès dynamique.

5. Le procédé pour établir rapidement un appel selon la revendication 3, **caractérisé en ce que** les terminaux utilisateur sélectionnent les canaux d'accès disponibles sur la base d'un algorithme de hachage.

6. Le procédé pour établir rapidement un appel selon la revendication 1 ou la revendication 2, **caractérisé en ce que** le message de recherche de diffusion inclut au moins l'identificateur de groupe et des informations relatives aux canaux d'accès dynamique.

7. Le procédé pour établir rapidement un appel selon la revendication 1 ou la revendication 2, **caractérisé en ce que** le message de réponse de recherche inclut au moins l'identificateur de groupe.

8. Le procédé pour établir rapidement un appel selon la revendication 1 ou la revendication 2, **caractérisé en ce que** le message d'assignation de canal étendu adopte un mode d'assignation réservé 7 et omet un paramètre de contrôle de puissance et de code de longueur dans celui-ci.

9. Le procédé pour établir rapidement un appel selon la revendication 1, **caractérisé en ce qu'**il comprend en outre les étapes consistant à : fournir un chronomètre dans le sous-système de station de base ; et libérer les canaux d'accès dynamique dans le cas où le chronomètre dépasse le temps imparti.
